# EUROPÄISCHE PATENTSCHRIFT

(11) **EP 3 418 002 B1**
(45) Veröffentlichungstag und Bekanntmachung des Hinweises auf die Patenterteilung: **31.07.2024**
(21) Anmeldenummer: 18178319.2
(22) Anmeldetag: 18.06.2018
(51) Int. Cl.: B24D 13/14, C04B 35/653, C04B 35/00, B22F 10/28, B33Y 10/00, B33Y 80/00, B24D 18/00, B22F 7/06

(54) **VERFAHREN ZUM HERSTELLEN EINES SCHLEIFKÖRPERS SOWIE EIN NACH DIESEM VERFAHREN HERGESTELLTER SCHLEIFKÖRPER**
METHOD FOR MANUFACTURING A GRINDING STONE AND GRINDING STONE MANUFACTURED ACCORDING TO THIS METHOD
PROCÉDÉ DE FABRICATION D'UN CORPS ABRASIF AINSI QUE CORPS ABRASIF FABRIQUÉ SELON LEDIT PROCÉDÉ

(30) Priorität: 19.06.2017 DE 102017113369
(43) Veröffentlichungstag der Anmeldung: 26.12.2018
(73) Patentinhaber: Carl Hilzinger-Thum GmbH & Co. KG, 78532 Tuttlingen (DE)
(72) Erfinder: Renner, Markus, 78579 Neuhausen ob Eck (DE)
(74) Vertreter: Westphal, Mussgnug & Partner Patentanwälte mbB

(56) Entgegenhaltungen:
- EP-A1- 0 452 618
- US-A- 5 607 488
- US-A- 6 126 533
- US-A1- 2006 185 256

## Beschreibung

Die vorliegende Erfindung betrifft ein Verfahren zum Herstellen eines Schleifkörpers, insbesondere einer Schleifbürste oder eines Schleifsteines. Weiterhin betrifft die Erfindung einen Schleifkörper, insbesondere eine Schleifbürste oder einen Schleifstein, der nach einem derartigen Verfahren hergestellt ist.

Schleifkörper werden immer dann eingesetzt, wenn eine Oberfläche mit einer bestimmten Oberflächengüte versehen werden soll oder Kanten und Funktionsflächen nach dem Stanzen und Zerspanen entgratet, bzw. verrundet werden müssen. Dies ist in verschiedenen Bereichen der Technik notwendig. So ist es beispielsweise in medizinischen Anwendungen von großer Wichtigkeit, dass die Oberflächen, mit welchen ein wiederverwendbares medizinisches Instrument mit dem Körper eines Patienten in Kontakt treten, so glatt wie möglich sind. Hierdurch kann eine ausreichende Sterilisation gewährleistet und verhindert werden, dass Bakterien und andere Krankheitserreger trotz intensiver Reinigung und Sterilisation an der Oberfläche anhaften und Krankheiten von einem Patienten an den nächsten übertragen werden können.

Schleifkörper, insbesondere Schleifbürsten werden üblicherweise auf folgende Weise hergestellt: Eine Anzahl von Filamenten, die beispielsweise eine Matrix aus Polypropylen oder Polyamid aufweisen, in welche Schleifkörner eingebettet sind. Die einzelnen Entgratfilamente werden anschließend gebündelt und entweder mechanisch in eine Bohrung gepresst und mit einem Haltedraht verankert oder bündelweise in einem Kunstharz vergossen. Die Filamente müssen dabei um ein bestimmtes Maß in den Grundkörper hineinragen, um ausreichenden Halt zu finden.

Mit ihrem freien Ende treten die Filamente mit der zu behandelnden Oberfläche in Kontakt. Einige der in die Filamente eingebetteten Schleifkörner ragen insbesondere am freien Ende der Filamente über die Matrix heraus, so dass die Schleifkörner teilweise freiliegen und mit der zu behandelnden Oberfläche in Kontakt treten können. Mit zunehmender Betriebsdauer nutzen sich die Filamente ab, so dass sich ihre Höhe allmählich reduziert, bis sie nur noch um eine vergleichsweise geringe Distanz aus dem Grundkörper hervorstehen. Spätestens dann muss die Schleifbürste gegen eine neue Schleifbürste ausgetauscht werden.

Wie bereits erwähnt, müssen die Filamente um ein bestimmtes Maß in den Grundkörper hineinragen, damit diese ausreichend fest im Grundkörper verankert werden. Folglich muss der Grundkörper eine gewisse Mindesthöhe aufweisen, um die notwendige Verankerung zu gewährleisten. Die Mindesthöhe beträgt ca. 6 bis 8 mm. Bei einigen Anwendungen ist jedoch der zur Verfügung stehende Raum so weit begrenzt, dass die Höhe des Grundkörpers den Einsatz einer derartigen Schleifbürste erschwert oder sogar unmöglich macht.

Zudem sind die Filamente nur mit einem kreisförmigen oder elliptischen Querschnitt verfügbar, so dass die Möglichkeiten, die Schleifbürste an bestimmte Anforderungen anzupassen, beschränkt sind.

Schleifsteine sind typischer Weise flache, eckige oder runde bis ovale Werkzeuge und werden zum Schleifen und Glätten der zu behandelnden Oberflächen verwendet. Schleifsteine werden im Stand der Technik üblicher Weise aus einem Grundkörper und wenigstens einem Schleifabschnitt hergestellt, wobei der Grundkörper fest mit dem Schleifabschnitt verbunden ist und der Befestigung an einer Maschine dient. Schleifsteine bzw. die Schleifabschnitte werden naturgemäß in unterschiedlichen Härten zum Bearbeiten unterschiedlicher Werkstoffe und zu behandelnder Oberflächen von Weich bis Hart angeboten. Der Schleifbereich kann somit mit einem Fließ, einem elastisch oder plastisch verformbaren Werkstoff oder Werkstoffstruktur versehen sein.

Aufgabe einer Ausführungsform der vorliegenden Erfindung ist es, ein Verfahren anzugeben, mit welchem den beschriebenen Nachteilen begegnet werden kann. Insbesondere soll das Verfahren die Möglichkeit eröffnen, Schleifkörper mit einem geringen Raumbedarf bereitzustellen und die Schleifkörper flexibel und ohne nennenswerten Mehraufwand an verschiedene Anforderungen anzupassen.

Aus der US 2006 / 0 185 256 A1 ist ein Verfahren zum Herstellen eines Schleifkörpers mit einem 3D-Druckverfahren vorbekannt. Ein pulverförmiges Sintermaterial wird auf eine Plattform Schicht für zur Bildung eines Sinterkörpers auf einem Grundkörper aufgetragen wird und mittels einer Energiequelle verfestigt wird. Nachteil an diesem Stand der Technik ist, dass der Grundkörper und der Sinterkörper keine einheitliche Struktur aufweisen, und dass die Härte des Sinterkörpers nicht gezielt eingestellt werden kann.

US 6 126 533 A lehrt ein Spritzgussverfahren zur Herstellung eines Schleifkörpers.

Des Weiteren liegt einer Ausgestaltung der vorliegenden Erfindung die Aufgabe zugrunde, einen Schleifkörper zu schaffen, welcher nach diesem Verfahren hergestellt ist.

Diese Aufgabe wird mit den in den Ansprüchen 1 und 5 angegebenen Merkmalen gelöst. Vorteilhafte Ausführungsformen sind Gegenstand der Unteransprüche.

Eine Ausführungsform der Erfindung betrifft ein Verfahren zum Herstellen eines Schleifkörpers, umfassend folgende Schritte:
- Bereitstellen eines pulverförmigen Sintermaterials,
- Bereitstellen von Schleifkörnern,
- Herstellen einer Mischung aus dem Sintermaterial und den Schleifkörnern,
- Herstellen eines verfestigten Sinterkörpers, aufweisend einen Trägerabschnitt und einen oder mehrere Schleifabschnitte, durch schichtweises wiederholtes Ausschmelzen oder Aufsintern des Sintermaterials, wobei die Schleifabschnitte eine Wabenstruktur parallel zu dem Trägerabschnitt aufweisen, die eine elastische und/oder plastische Verformbarkeit aufweist, durch die die Härte des Schleifkörpers senkrecht zu der Ebene des Trägerabschnittes eingestellt werden kann, oder wobei die Schleifabschnitte eine Vliesform oder eine Schwammform aufweisen, wobei
- die Schleifkörner im verfestigten oder auf dem Sinterkörper eingeschlossen bzw. eingebettet sind und
- das schichtweise Schmelzen oder Versintern solange fortgesetzt wird, bis der Sinterkörper die gewünschte Form der Schleifbürste annimmt.

Das vorliegende Verfahren kann sich an das selektive Lasersintern (SLS) mit dem wesentlichen Unterschied anlehnen, dass vorschlagsgemäß eine Mischung aus dem Sintermaterial und den Schleifkörnern hergestellt wird. Der Sinterkörper wird Schicht für Schicht aufgebaut, so dass ein zusammenhängender Sinterkörper mit einer über den Sinterkörper einheitlichen Struktur entsteht. Das Sintermaterial wird aufgrund der Wärmeeinwirkung, insbesondere eines Lasers oder eines Plasmastrahles miteinander verschmolzen oder miteinander versintert, so dass aus dem Sintermaterial ein zusammenhängender Sinterkörper durch wiederholtes Aufschmelzen oder Aufsintern geschaffen wird. Die Wärmeeinwirkung des Lasers reicht allerdings nicht aus, um Veränderungen an den Schleifkörnern hervorzurufen. Folglich werden die Schleifkörner in den Sinterkörper eingebettet.

Im Gegensatz zu aus dem Stand der Technik bekannten Schleifkörpern, insbesondere Schleifbürsten oder Schleifsteinen, kann nicht mehr zwischen einem Grundkörper und den Filamenten bzw. dem Schleifabschnitt unterschieden werden. Folglich ist es nicht mehr notwendig, dass die Filamente oder der Schleifabschnitt um ein bestimmtes Maß in den Grundkörper hineinragen müssen und folglich der Grundkörper eine gewisse Mindesthöhe aufweisen muss. Vielmehr weist der Sinterkörper einen Trägerabschnitt auf, von welchem ausgehend sich eine Anzahl von Schleifabschnitten erhebt. Die Höhe des Trägerabschnitts kann im Vergleich zur Höhe des Grundkörpers von aus dem Stand der Technik bekannten Schleifkörpern deutlich verringert werden, so dass der vorschlagsgemäße Schleifkörper insgesamt weniger Bauraum einnimmt und daher auch in Anwendungen eingesetzt werden kann, wo bislang aufgrund der Mindesthöhe des Grundkörpers ein Einsatz nicht möglich war.

Generell lässt sich der Schleifkörper, insbesondere die Schleifbürste oder der Schleifstein, welche nach dem vorschlagsgemäßen Verfahren hergestellt ist, mit jeder beliebigen Form herstellen. Hierdurch wird die Gestaltungsfreiheit in der Formgebung gegenüber aus dem Stand der Technik bekannten Schleifkörpern erheblich vergrößert. Insbesondere lässt sich die Form der Schleifkörper sehr präzise an den jeweils gegebenen Anwendungsfall anpassen. Da unterschiedliche Formen letztlich nur eine andere Führung der Verschmelzung der Schleifkörner und des pulverförmigen Sintermaterials, insbesondere mittels eines Lasers, voraussetzen, lässt sich auch eine sehr geringe Anzahl an Schleifbürsten oder Schleifsteinen kostengünstig fertigen. So ist es mit einem vertretbaren ökonomischen Aufwand möglich, für einen sehr speziellen Anwendungsfall eine vergleichsweise geringe Anzahl von Schleifkörper, beispielsweise Schleifbürsten oder Schleifsteine herzustellen.

Nach Maßgabe einer weiteren Ausführungsform ist das Sintermaterial ein thermoplastischer Kunststoff, (insbesondere Polyamid (PA).

Wie eingangs beschrieben, bewirkt die Wärmeeinwirkung, insbesondere des Lasers oder des Plasmastrahls, ein Verschmelzen oder ein Versintern des Sintermaterials. Dabei haben sich z.B. thermoplastische Kunststoffe als besonders günstig erwiesen, da sich mit ihnen einerseits ein sehr homogener Sinterkörper herstellen lässt und andererseits der benötigte Wärmeintrag und die Dauer der Wärmeeinwirkung sowie folglich die Herstellungskosten gering gehalten werden können. Besonders Polyamid hat sich als sehr günstig erwiesen.

In einer weitergebildeten Ausführungsform können die Schleifkörner aus Metallpulver, Flint, Quarz, Korund, Schmirgel, Natur- oder Industriediamant, Granat, Siliziumcarbid, Chromoxid und/oder kubischem Bornitrid bestehen. Werden derartige Schleifkörner verwendet, so ist sichergestellt, dass diese sich infolge der Wärmeeinwirkung beim Aufbau des Sinterkörpers nicht oder nur unwesentlich verändern. Folglich büßen sie ihre abrasive Wirkung infolge der Wärmebehandlung beim Aufbau des Sinterkörpers nicht ein. Darüber hinaus lässt sich mit der Auswahl des Materials der Schleifkörner die vorschlagsgemäße Schleifbürste sehr einfach an die Anforderungen anpassen. Es sei an dieser Stelle angemerkt, dass das erfindungsgemäße Verfahren die Wahl des Materials für die Schleifkörner nicht beschränkt. Es muss nur sichergestellt werden, dass das Material der Schleifkörner infolge der Wärmebehandlung beim Aufbau des Sinterkörpers nicht nachteilig verändert wird.

Eine Ausgestaltung der Erfindung betrifft einen Schleifkörper, insbesondere eine Schleifbürste oder einen Schleifstein mit einem Sinterkörper, hergestellt nach einem Verfahren nach einem der vorherigen Ausführungsformen.

Die technischen Effekte und Vorteile, die sich mit dem vorschlagsgemäßen Schleifkörper erreichen lassen, entsprechen denjenigen, die für das vorliegende Verfahren erörtert worden sind. Zusammenfassend sei darauf hingewiesen, dass der so hergestellte Sinterkörper eine einheitliche und homogene Struktur aufweist, so dass nicht wie im Stand der Technik der Fall zwischen einem Grundkörper und den Filamenten bzw. dem Schleifbereich unterschieden werden kann. Die Einschränkung in der Gestaltung des Schleifkörpers, wonach die sichere Verankerung der Filamente oder des Schleifabschnittes im Grundkörper gegeben sein muss, entfällt folglich. Generell lässt sich der Schleifkörper, welcher nach dem vorschlagsgemäßen Verfahren hergestellt ist, mit jeder beliebigen Form herstellen. Hierdurch wird die Gestaltungsfreiheit in der Formgebung gegenüber aus dem Stand der Technik bekannten Schleifkörpern erheblich vergrößert. Insbesondere lässt sich die Form der Schleifkörper sehr präzise an den jeweils gegebenen Anwendungsfall anpassen. Da unterschiedliche Formen letztlich nur eine andere Führung beim Erhitzen des pulverförmigen Sintermaterials und der Schleifkörner beispielsweise mittels des Lasers voraussetzen, lässt sich auch eine sehr geringe Anzahl an Schleifkörpern, insbesondere Schleifbürsten oder Schleifsteinen kostengünstig fertigen. So ist es also mit einem vertretbaren ökonomischen Aufwand möglich, für einen sehr speziellen Anwendungsfall eine vergleichsweise geringe Anzahl von Schleifkörpern herzustellen.

In einer weiteren Ausgestaltung kann der Sinterkörper einen Trägerabschnitt und einen oder mehrere Schleifabschnitte aufweisen, wobei der Trägerabschnitt eine Höhe zwischen 1 mm und 5 mm und insbesondere zwischen 2 mm und 4 mm aufweist. Wie erwähnt, weisen Schleifbürsten aus dem Stand der Technik einen Grundkörper auf, in welchem die Filamente bzw. mindestens ein Schleifabschnitt verankert sind bzw. ist. Um eine sichere Verankerung der Filamente oder des Schleifabschnittes im Grundkörper zu ermöglichen, muss dieser eine Mindesthöhe aufweisen, welche mindestens 6 mm beträgt. Die vorschlagsgemäße Schleifbürste weist einen Trägerabschnitt auf, von welchem aus sich die Schleifabschnitte erheben. Der Trägerabschnitt dient im Wesentlichen nur dazu, die verschiedenen Schleifabschnitte miteinander zu verbinden und das Einspannen der Schleifbürste oder des Schleifsteins in ein geeignetes Werkzeug zu ermöglichen. Um diese Anforderungen zu erfüllen, kann die Höhe des Trägerabschnitts im Vergleich zu der Höhe des Grundkörpers von aus dem Stand der Technik bekannten Schleifbürsten oder Schleifsteinen deutlich geringer gewählt werden, so dass die vorschlagsgemäße Schleifbürste oder ein vorschlagsgemäßer Schleifstein einen deutlich geringeren Raum benötigt. Die vorschlagsgemäße Schleifbürste oder der vorschlagsgemäße Schleifstein können daher auch in Anwendungen eingesetzt werden, wo der zur Verfügung stehende Raum sehr begrenzt ist und deshalb der Einsatz von aus dem Stand der Technik bekannten Schleifbürsten oder Schleifsteinen nicht möglich ist.

Gemäß einer weiteren Ausgestaltung ist der Schleifabschnitt in sich geschlossen. Wie bereits erwähnt, weisen Schleifkörper aus dem Stand der Technik eine Anzahl von Filamenten auf, welche in einem Grundkörper verankert sind. Folglich wird ein Schleifabschnitt von einer entsprechend gewählten Anzahl von Filamenten gebildet. Aufgrund dieser konstruktiven Notwendigkeit können die mechanischen Eigenschaften der Schleifabschnitte nur begrenzt verändert werden. So können beispielsweise die Biegesteifigkeit und die Knicklast der Schleifabschnitte nur durch einen anderen Durchmesser der Filamente verändert werden. Im Gegensatz dazu ist es mit dem vorschlagsgemäßen Verfahren möglich, in sich geschlossene Schleifabschnitte herzustellen, welche eine bestimmte Form zusammenhängend durchlaufen. Die Unterteilung in eine Anzahl von Filamenten kann daher nicht mehr getroffen werden. Die Biegesteifigkeit und die Knicklast von zusammenhängenden Schleifabschnitten lassen sich gegenüber Schleifabschnitten, die aus einer Vielzahl von Filamenten bestehen, deutlich erhöhen oder verringern. Hierdurch lässt sich die Kraft, welche auf die zu behandelnde Oberfläche aufgebracht wird, ebenfalls entsprechend erhöhen oder verringern. Mit dem vorschlagsgemäßen Schleifkörper lassen sich auch besonders harte oder weiche Werkstoffe behandeln, welche sich mit aus dem Stand der Technik bekannten Schleifkörpern nicht behandeln lassen.

Erfindungsgemäß weisen die Schleifabschnitte einen parallel zu dem Trägerabschnitt wabenförmigen, fliesförmigen oder schwammförmigen, dreidimensionalen Aufbau auf. Je nach Anwendungsfall lässt sich der Schleifabschnitt mit allen denkbaren Querschnitten versehen. Auch lässt sich der Schleifabschnitt wie im Stand der Technik aus vielen einzelnen Unterabschnitten aufbauen, so dass wiederum eine Anzahl an unterschiedlichen Schleifabschnitten vorhanden ist. Hierdurch lassen sich die vorschlagsgemäßen Schleifkörper mit den Eigenschaften von bekannten Schleifkörpern versehen, was insbesondere dann Sinn macht, wenn sich ein bestimmter, aus dem Stand der Technik bekannter Schleifkörper für eine bestimmte Anwendung bewährt hat oder von einer Norm vorgeschrieben ist.

Beispielhafte Ausführungsformen der Erfindung werden im Folgenden unter Bezugnahme auf die beigefügten Zeichnungen näher erläutert. Es zeigen
- Figur 1a): ein aus dem Stand der Technik bekannten Schleifkörper anhand einer Draufsicht,
- Figur 1b): eine nicht maßstäblich vergrößerte ausschnittsweise Darstellung des Schleifkörpers entlang der in Figur 1a) definierten Schnittebene A-A,
- Figur 2: eine prinzipielle Darstellung zum Erläutern des erfindungsgemäßen Verfahrens,
- Figur 3: eine an die Figur 1b) angelehnte Darstellung durch einen Schleifkörper,
- Figuren 4a) - 4c): verschiedene Ausführungsformen von Schleifabschnitten von Schleifkörpern, jeweils anhand von prinzipiellen Draufsichten,
- Figuren 5a) - 5c): eine weitere Ausführungsform die nicht Gegenstand der Erfindung ist, eines Schleifkörpers mit einem wabenförmig ausgebildeten Schleifabschnitt, und
- Figuren 6a) - 6c): eine Ausführungsform der Erfindung.

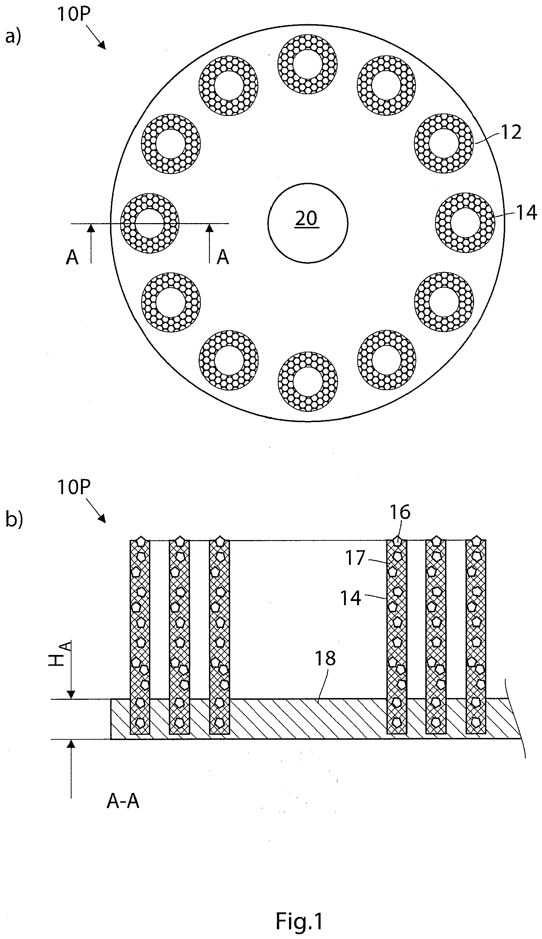

In Figur 1a) ist ein Schleifkörper 10P nach dem Stand der Technik anhand einer prinzipiellen Draufsicht und in Figur 1b) entlang der in Figur 1a) dargestellten Schnittebene A-A dargestellt, der als Schleifbürste ausgebildet ist. Der Schleifkörper 10P weist insgesamt 12 Schleifabschnitte 12 auf, welche jeweils einen kreisringförmigen Querschnitt aufweisen. Die Schleifabschnitte 12 werden von einer Anzahl von Filamenten 14 gebildet, welche jeweils einen in etwa kreisförmigen Querschnitt aufweisen. In Figur 1a) ist erkennbar, dass der ursprünglich kreisförmige Querschnitt von einigen der Filamente 14, die sich an den Rändern der Schleifabschnitte 12 befinden, so verändert wurde, dass die Schleifabschnitte 12 den oben erwähnten kreisringförmigen Querschnitt aufweisen.

Wie insbesondere in Figur 1b) ersichtlich ist, weisen die Filamente 14 eine Anzahl von Schleifkörnern 16 auf, die in eine Matrix 17 der Filamente 14 eingebettet sind. Die die Schleifkörner 16 umschließende Matrix 17 der Filamente 14 kann beispielsweise aus Polyamid oder Polypropylen bestehen. Die Filamente 14 sind in einem Grundkörper 18 des Schleifkörpers 10P verankert. Der Grundkörper 18 wird durch Umgießen der Filamente 14 hergestellt. Insbesondere aufgrund der Tatsache, dass zum Herstellen des Grundkörpers ein Gießwerkzeug eingesetzt werden muss, weist der Grundkörper 18 keine eingebetteten Schleifkörner 16 auf, da die Schleifkörner 16 aufgrund ihrer abrasiven Wirkung das Spritzgusswerkzeug beschädigen würden.

Um zu gewährleisten, dass die Filamente 14 ausreichend im Grundkörper 18 verankert sind, muss dieser eine Mindesthöhe HA aufweisen, die üblicherweise 6 mm oder mehr beträgt.

Der Grundkörper 18 weist in der Draufsicht einen kreisförmigen Querschnitt auf, auf welchem die Schleifabschnitte 12 gleichmäßig in Umfangsrichtung verteilt angeordnet sind. Zudem weist der Grundkörper 18 eine zentrale, kreisförmige Aufnahmeöffnung 20 auf, über welche der Schleifkörper 10P mit einem Werkzeug verbunden werden kann.

Wie insbesondere in Figur 1b) erkennbar ist, stehen einige der Schleifkörner 16 insbesondere am freien Ende der Filamente 14 über die Matrix 17 heraus. Beim Behandeln einer Oberfläche mit dem Schleifkörper 10P können die herausstehenden Schleifkörner 16 direkt mit der Oberfläche in Kontakt treten. Mit zunehmender Betriebsdauer nutzen sich die Filamente 14 ab, so dass sich ihre Höhe immer weiter reduziert. Wenn sich ihre Höhe soweit reduziert hat, dass die Filamente 14 nur noch um ein geringes Maß aus dem Grundkörper 18 heraus stehen, muss der Schleifkörper 10P , bzw. die Schleifenbürste, ausgetauscht werden.

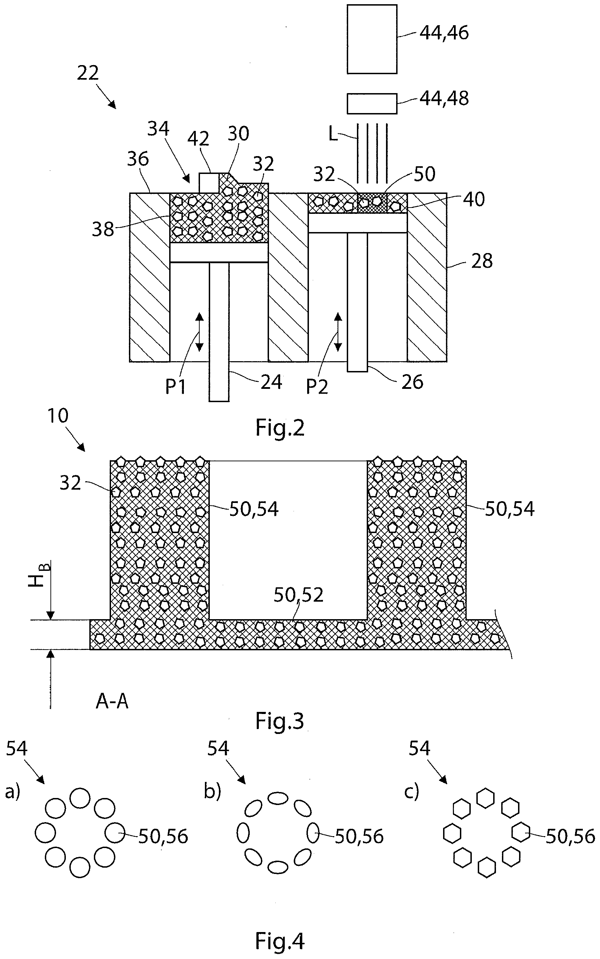

In Figur 2 ist das erfindungsgemäße Verfahren anhand einer prinzipiellen Darstellung gezeigt. Zum Herstellen eines erfindungsgemäßen Schleifkörpers 10 wird im dargestellten Beispiel ein 3D-Drucker 22 verwendet, welcher einen Förderkolben 24 und einen Fertigungskolben 26 aufweist. Sowohl der Förderkolben 24 als auch der Fertigungskolben 26 sind von einer Begrenzungswandung 28 umgeben, innerhalb welcher der Förderkolben 24 und der Fertigungskolben 26 axial bewegt werden können. Die Bewegungsrichtung ist mit den Pfeilen P1 und P2 gekennzeichnet.

Zunächst wird ein pulverförmiges Sintermaterial 30 mit einer Anzahl von Schleifkörnern 32 zu einer Mischung 34 vermischt. Der Förderkolben 24 wird gegenüber einem oberen Ende 36 der Begrenzungswandung 28 soweit zurückgezogen, dass zwischen der Begrenzungswandung 28 und dem Förderkolben 24 ein Aufnahmeraum 38 mit einem bestimmten Volumen freigegeben wird. Anschließend wird die Mischung 34 in den Aufnahmeraum 38 eingebracht. Der Förderkolben 24 wird nun so weit in Richtung des oberen Endes 36 vorgeschoben, dass ein Teil der Mischung 34 aus dem Sintermaterial 30 und den Schleifkörnern 32 über das obere Ende 36 der Begrenzungswandung 28 übersteht. Der Fertigungskolben 26 hingegen wird gegenüber dem oberen Ende 36 so weit zurückgezogen, dass er einen Arbeitsraum 40 mit der Begrenzungswandung 28 einschließt, welcher ein Arbeitsvolumen aufweist, das in etwa dem Volumen der Mischung 34 entspricht, welches vom Förderkolben 24 über das obere Ende 36 der Begrenzungswandung 28 hinaus vorgeschoben wurde. Der überstehende Teil der Mischung 34 wird mit einem Rakel 42 oder einem anderen Fördermittel in den Arbeitsraum 40 geschoben.

Der 3D-Drucker 22 weist zudem mindestens einen Laser 44 mit einem Lasermodul 46 und einem Galvanometerscanner 48 auf. Das Lasermodul 46 stellt mindestens einen Laserstrahl L bereit, welcher mit dem Galvanometerscanner 48 so umgelenkt werden kann, dass eine beliebige Strecke abgefahren werden kann. Dementsprechend können beispielsweise mittels der Multibeam-Technologie mehrere Laserstrahlen L die beliebige Strecke abfahren. Die abzufahrende Strecke kann beispielsweise mittels eines nicht dargestellten CAD-Systems vorgegeben werden.

Die Mischung 34 aus dem Sintermaterial 30 und den Schleifkörnern 32 wird nun mittels des Laserstrahls L mit Wärme beaufschlagt, so dass sich das Sintermaterial 30 aufgrund der Wärmeeinwirkung durch Schmelzen oder Versintern verfestigt. Ob das Sintermaterial 30 durch Schmelzen oder Versintern verfestigt wird, hängt von den Eigenschaften des Sintermaterials ab.

Ist eine erste Schicht vollständig gefertigt worden, so wird der Fertigungskolben 26 weiter gegenüber dem oberen Ende 36 zurückgezogen, so dass ein neuer Arbeitsraum 40 entsteht. Der Förderkolben 24 wird vorgeschoben, so dass wiederum ein Teil der Mischung 34 über das obere Ende 36 der Begrenzungswand übersteht, welches mit der Rakel 42 in den Arbeitsraum 40 geschoben wird. Anschließend wird der Laserstrahl L entlang der vorgegebenen Strecke verfahren, wodurch das Sintermaterial 30 verfestigt wird. Dieser Vorgang wird solange wiederholt, bis ein so schichtweise entstehender Sinterkörper 50 die gewünschte Form aufweist.

In Figur 3 ist ein Schleifkörper 10 anhand einer prinzipiellen Schnittdarstellung gezeigt. Der grundsätzliche Aufbau des Schleifkörpers 10 entspricht dabei demjenigen, welcher in Figur 1a) dargestellt ist. Entsprechend ist auf eine Darstellung des Schleifkörpers 10 anhand einer Draufsicht verzichtet worden. Die Schnittebene der Figur 3 entspricht derjenigen aus Figur 1b), wobei die Bezeichnung A-A der Schnittebene nicht so zu verstehen ist, dass sie durch den Schleifkörper 10P nach dem Stand der Technik verläuft.

Man erkennt, dass der Sinterkörper 50 des erfindungsgemäßen Schleifkörpers 10 einen Trägerabschnitt 52 und eine Anzahl von Schleifabschnitten 54 aufweist. Im Gegensatz zu den Schleifabschnitten 54 von aus dem Stand der Technik bekannten Schleifbürsten 10P sind keine Filamente vorhanden, die in einem Grundkörper 18 verankert sind. Vielmehr weisen der Trägerabschnitt 52 und die Schleifabschnitte 54 denselben Aufbau auf. Der Trägerabschnitt 52 weist eine Höhe H_{B} auf, welche im Vergleich zu der Höhe H_{A} des Grundkörpers (siehe Figur 1a)) deutlich geringer ist und beispielsweise zwischen 1 mm und 5 mm betragen kann. Zudem ist aus Figur 3 erkennbar, dass die Schleifabschnitte 54 in sich geschlossen sind. Hierdurch lassen sich die Biegesteifigkeit und die Knicklast im Vergleich zu den aus dem Stand der Technik bekannten Schleifbürsten 10 erhöhen.

Wie bereits zu den aus dem Stand der Technik bekannten Schleifkörpern 10P erwähnt, nutzen sich die Schleifabschnitte 54 im Betrieb des Schleifkörpers 10 mit der Zeit ab. Da aber der Trägerabschnitt 52 denselben Aufbau aufweist wie die Schleifabschnitte 54 und insbesondere auch die eingebetteten Schleifkörner 32, wirkt der Trägerabschnitt 52 ebenfalls abrasiv auf die zu behandelnden Oberflächen. Wenn die Schleifabschnitte 54 soweit abgenutzt sind, dass diese als solche nicht mehr vorhanden sind, kann der Schleifkörper 10 dennoch weiter betrieben werden, wobei in diesem Fall die zu behandelnden Oberflächen mit dem Trägerabschnitt 52 in Kontakt kommen. Hierdurch lässt sich der erfindungsgemäße Schleifkörper 10 im Vergleich zu aus dem Stand der Technik bekannten Schleifkörpern 10P länger verwenden.

Zudem kann die von den Schleifabschnitten 54 abgewandte Seite des Trägerabschnitts 52 zum Behandeln der Oberfläche verwendet werden. Ebenfalls denkbar ist, auf beiden Seiten des Trägerabschnitts 52 Schleifabschnitte 54 vorzusehen. Somit können beispielsweise zwei zueinander hinweisende und parallel zueinander verlaufende Oberflächen gleichzeitig mit der vorschlagsgemäßen Schleifbürste 10 behandelt werden.

In den Figuren 4a) bis 4c) sind verschiedene Ausführungsformen von Schleifabschnitten 54 der erfindungsgemäßen Schleifbürste 10 anhand einer prinzipiellen Draufsicht gezeigt. Während der in Figur 3 gezeigte Schleifabschnitt 54 in sich geschlossen ist, werden die in den Figuren 4a) bis 4c) gezeigten Schleifabschnitte 54 von einer Anzahl von Unterabschnitten gebildet, die ähnlich wie die aus dem Stand der Technik bekannten Filamente 14 (siehe Figur 1b)) ausgebildet sind. In dem in Figur 4a) dargestellten Ausführungsbeispiel weisen die Unterabschnitte 56 einen kreisförmigen Querschnitt auf, während sie in dem in Figur 4b) dargestellten Ausführungsbeispiel einen elliptischen Querschnitt aufweisen. In dem in Figur 4c) dargestellten Ausführungsbeispiel wird der Schleifabschnitt 54 von einer Anzahl von Unterabschnitten 56 gebildet, die jeweils einen polygonen Querschnitt, in diesem Fall einen sechseckigen Querschnitt, aufweisen.

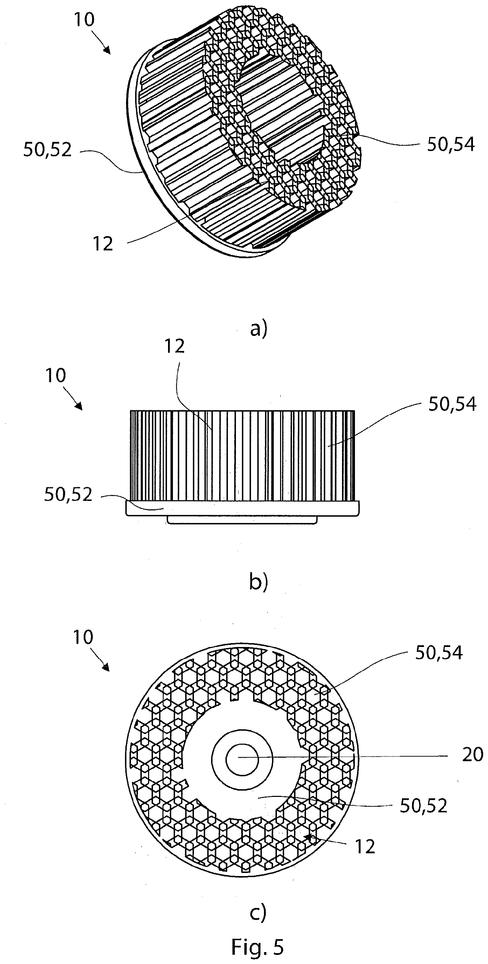

In den Figuren 5a) bis 5c) ist eine weitere Ausführungsform eines Schleifkörpers 10 dargestellt, der als Schleifstein ausgebildet ist und einen Schleifabschnitt 54 aufweist. Die Schleifabschnitte 54 sind in sich geschlossen aus einer Vielzahl von mehrkantigen Waben ausgebildet, die sich senkrecht von dem Trägerabschnitt 52 erstrecken. Die Waben können derart ausgeformt sein, dass der Schleifkörper 10 sowohl durch eine elastische und/oder plastische Verformung, als auch durch die Wahl der verwendeten Werkstoffe in einer beliebigen Härte ausgebildet werden kann.

Die Mischung 34 aus dem Sintermaterial 30 und den Schleifkörnern 32 wird zur Herstellung des Schleifkörpers 10, beispielsweise mittels des Laserstrahls L, mit Wärme beaufschlagt, so dass sich das Sintermaterial 30 aufgrund der Wärmeeinwirkung durch Schmelzen oder Versintern zur Bildung einer Schicht verfestigt. Anschließend werden weitere Schichten nach dem oben beschriebenen Verfahren erzeugt, bis der Sinterkörper 50 die gewünschte Form aufweist. Hierzu ist eine Vielzahl von übereinander aufgetragenen Schichten notwendig. Nach dem schichtweise Verschmelzen oder Versintern der Mischung 34 aus dem Sintermaterial 30 und den Schleifkörnern 32 kann durch ein Ausschütteln, Ausklopfen oder Ausblasen, beispielsweise mittels Druckluft, die nicht verschmolzenen Bestandteile der Mischung 34 von dem Schleifkörper 10, insbesondere aus den Zwischenräumen zwischen den Waben entfernt werden.

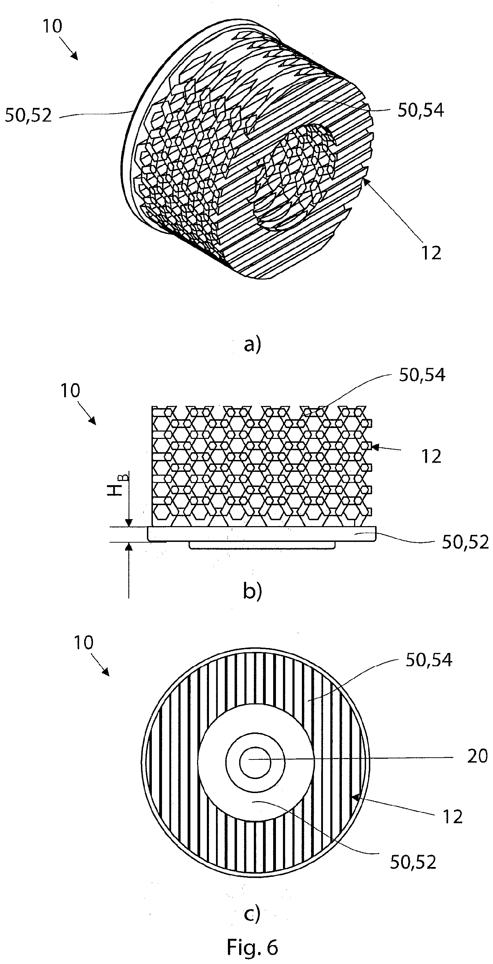

Analog zu dem in den Figuren 5a) - 5c) dargestellten Ausführungsbeispiel können die Waben auch parallel zu dem Trägerabschnitt 52 schichtweise aufgeschmolzen werden, wodurch die in den Figuren 6a) - 6c) dargestellte Ausführungsform des Schleifkörpers 10 bzw. des Schleifsteins eine besondere elastische und/oder plastische Verformbarkeit aufweist, durch die die Härte des Schleifkörpers 10 senkrecht zu der Ebene des Trägerabschnittes 54 eingestellt werden kann.

Die Form des mindestens einen Schleifabschnittes 54 kann beliebig gewählt sein. Insbesondere kann dieser durch das erfindungsgemäße Verfahren beliebig ausgebildet werden, so dass neben einer parallel zu dem Trägerabschnitt ausgebildete Wabenform, eine Art Vlies, oder dergleichen ausgebildet werden können. Im Sinne dieser Offenbarung wird der Begriff Schleifkörper für sämtliche Schleifwerkzeuge zum Entgraten, Schleifen und Polieren verwendet, insbesondere Schleifbürsten, Schleifsteine, Entgratbürsten, Rundbürsten, Rohrbürsten, Tellerbürsten, Pinselbürsten, Schleifräder, Schleifvlieswerkzeuge, Schleifstreifenringe, Polierringe, Polierscheiben, Sisalringe, Fiberbürsten.

### Bezugszeichenliste

- 10: Schleifbürste
- 10P: Schleifbürste nach dem Stand der Technik
- 12: Schleifabschnitt
- 14: Filament
- 16: Schleifkörner
- 17: Matrix
- 18: Grundkörper
- 20: Aufnahmeöffnung
- 22: 3D-Drucker
- 24: Förderkolben
- 26: Fertigungskolben
- 28: Begrenzungswandung
- 30: Sintermaterial
- 32: Schleifkörner
- 34: Mischung
- 36: oberes Ende
- 38: Aufnahmeraum
- 40: Arbeitsraum
- 42: Rakel
- 44: Laser
- 46: Lasermodul
- 48: Galvanometerscanner
- 50: Sinterkörper
- 52: Trägerabschnitt
- 54: Schleifabschnitt
- 56: Unterabschnitt

- H_{A}: Höhe Grundkörper
- H_{B}: Höhe Trägerabschnitt
- L: Laserstrahl
- P: Pfeil

## Patentansprüche

1. Verfahren zum Herstellen eines Schleifkörpers (10), insbesondere eine Schleifenbürste oder ein Schleifstein, umfassend folgende Schritte:
- Bereitstellen eines pulverförmigen Sintermaterials (30),
- Bereitstellen von Schleifkörnern (32),
- Herstellen einer Mischung (34) aus dem Sintermaterial (30) und den Schleifkörnern (32),
- Herstellen eines verfestigten Sinterkörpers (50), aufweisend einen Trägerabschnitt (52) und einen oder mehrere Schleifabschnitte (54), durch wiederholtes schichtweises Schmelzen oder Versintern des Sintermaterials (30), wobei die Schleifabschnitte (54) eine Wabenstruktur parallel zu dem Trägerabschnitt (52) aufweisen, die eine elastische und/oder plastische Verformbarkeit aufweist, durch die die Härte des Schleifkörpers (10) senkrecht zu der Ebene des Trägerabschnittes (52) eingestellt werden kann, oder
wobei die Schleifabschnitte (54) eine Vliesform oder eine Schwammform aufweisen, wobei
- die Schleifkörner (32) im oder auf dem verfestigten Sinterkörper (50) eingeschlossen bzw. eingebettet sind und
- das schichtweise Schmelzen oder Versintern solange fortgesetzt wird, bis der Sinterkörper (50) die gewünschte Form des Schleifkörpers (10) annimmt.

2. Verfahren nach Anspruch 1,
**dadurch gekennzeichnet, dass** das Sintermaterial (30) ein thermoplastischer Kunststoff, insbesondere Polyamid (PA) ist.

3. Verfahren nach einem der Ansprüche 1 oder 2,
**dadurch gekennzeichnet, dass** die Schleifkörner (32) aus Flint, Quarz, Korund, Schmirgel, Natur- oder Industriediamant, Granat, Siliziumcarbid, Chromoxid und/oder kubischem Bornitrid bestehen.

4. Verfahren nach einem der vorgenannten Ansprüche,
**dadurch gekennzeichnet, dass** das Verschmelzen oder Versintern des Sintermaterials (30), unter Verwendung mindestens eines Laserstrahls (L) oder eines Plasmastrahls erfolgt.

5. Schleifkörper (10), insbesondere eine Schleifenbürste oder ein Schleifstein, mit einem Sinterkörper (50), hergestellt nach einem Verfahren nach einem der vorherigen Ansprüche, wobei der Sinterkörper (50) einen Trägerabschnitt (52) und einen oder mehrere Schleifabschnitte (54) mit denselben Aufbau aus wiederholtem schichtweises Schmelzen oder Versintern des Sintermaterials (30) aufweist, wobei der Sinterkörper (50) den Trägerabschnitt (52) und den oder mehrere Schleifabschnitte (54) mit denselben Aufbau aus wiederholtem schichtweises Schmelzen oder Versintern eines Sintermaterials (30) aufweist, **dadurch gekennzeichnet, dass** die Schleifabschnitte (54) eine Wabenstruktur parallel zu dem Trägerabschnitt (52) aufweisen, die eine elastische und/oder plastische Verformbarkeit aufweist, durch die die Härte des Schleifkörpers (10) senkrecht zu der Ebene des Trägerabschnittes (54) eingestellt werden kann, oder dass die Schleifabschnitte (54) eine Vliesform oder eine Schwammform aufweisen.

6. Schleifkörper (10) nach Anspruch 5, **dadurch gekennzeichnet, dass** der Trägerabschnitt (52) eine Höhe (H_{B}) zwischen 1 mm und 5 mm und insbesondere zwischen 2 mm und 4 mm aufweist.

7. Schleifkörper (10) nach Anspruch 6, **dadurch gekennzeichnet, dass** die Schleifabschnitte (54) in sich geschlossen sind.

8. Schleifkörper (10) nach einem der Ansprüche 6 oder 7, **dadurch gekennzeichnet, dass** die Schleifabschnitte (54) einen kreisförmigen, elliptischen oder polygonen Querschnitt aufweisen.

## Claims

1. Method for manufacturing an abrasive body (10), in particular a grinding brush or a grinding stone, comprising the following steps:
- providing a pulverulent sinter material (30),
- providing abrasive particles (32),
- producing a mixture (34) of the sinter material (30) and the abrasive particles (32),
- producing a solidified sintered body (50) comprising a carrier section (52) and one or more abrasive sections (54) by means of the repeated melting or sintering of the sinter material (30) layer by layer, wherein the abrasive sections (54) comprise, parallel to the carrier section (52), a honeycomb structure which comprises an elastic and/or plastic deformability, by means of which the hardness of the abrasive body (10) can be regulated vertically to the plane of the carrier section (52), or
wherein the abrasive sections (54) comprise a web-form or a sponge-form, wherein
- the abrasive particles (32) are encapsulated or embedded in or on the solidified sintered body (50) and
- the layer by layer melting or sintering is continued until the sintered body (50) assumes the desired shape of the abrasive body (10).

2. Method in accordance with claim 1,
**characterized in that**
the sinter material (30) is a thermoplastic material, in particular a polyamide (PA).

3. Method in accordance with either of claims 1 or 2,
**characterized in that**
the abrasive particles (32) are comprised of flint, quartz, corundum, emery, natural or industrial diamond, garnet, silicon carbide, chromium oxide and/or cubic boron nitride.

4. Method in accordance with any of the preceding claims,
**characterized in that**
the melting or sintering of the sinter material (30) is carried out using at least one laser beam (L) or a plasma beam.

5. Abrasive body (10), in particular an abrasive brush or an abrasive stone, having a sintered body (50) produced in accordance with a method in accordance with any of the preceding claims, wherein the sintered body (50) comprises a carrier section (52) and one or more abrasive sections (54) which have the same configuration of repeated, layer by layer melting or sintering of the sinter material (30), wherein the sintered body (50) comprises the carrier section (52) and the one or more abrasive sections (54) with the same configuration of repeated, layer by layer melting or sintering of a sinter material (30),
**characterized in that**
the abrasive sections (54) comprise, parallel to the carrier section (52), a honeycomb structure and/or a plastic deformability, by means of which the hardness of the abrasive body (10) vertically to the plane of the carrier section (54) can be regulated, or **in that** the abrasive sections (54) comprise a web-form or a sponge-form.

6. Abrasive body (10) in accordance with claim 5,
**characterized in that**
the carrier section (52) comprises a height (H_{B}) of between 1 mm and 5 mm and, in particular, between 2 mm and 4 mm.

7. Abrasive body (10) in accordance with claim 6,
**characterized in that**
the abrasive sections (54) are self-contained.

8. Abrasive body (10) in accordance with either of claims 6 or 7,
**characterized in that**
the abrasive sections (54) comprise a circular, an elliptical, or a polygonal cross-section.

## Revendications

1. Procédé de fabrication d'un corps abrasif (10), notamment d'une brosse abrasive ou d'une pierre abrasive comprenant les étapes suivantes consistant à :
- fournir (30) un matériau de frittage à l'état de poudre,
- fournir des grains abrasifs (32),
- fournir un mélange (34) de matériau de frittage (30) et de grains abrasifs (32),
- réaliser un corps de frittage solidifié (50) comprenant un segment de support (52) et un ou plusieurs segments abrasifs (54) par la fusion ou le frittage répété, par couches du matériau de frittage (30),
* les segments abrasifs (54) ayant une structure de nids d'abeille par rapport au segment de support (52) et une déformabilité élastique et/ou plastique par laquelle on règle la dureté du corps abrasif (10) perpendiculairement au plan du segment de support (52), ou
* les segments abrasifs (54) ont une forme de non-tissé ou une forme en éponge,
* les grains abrasifs (32) sont enfermés ou intégrés dans le corps fritté (50) solidifié, et
- on poursuit la fusion ou le frittage par couches, aussi longtemps que le corps fritté (50) prend la forme souhaitée du corps abrasif (10).

2. Procédé selon la revendication 1,
**caractérisé en ce que**
le matériau de frittage (30) est une matière synthétique thermoplastique notamment un polyamide (PA).

3. Procédé selon l'une des revendications 1 ou 2,
**caractérisé en ce que**
les grains abrasifs (32) sont en flint, quartz, corindon, émeri, diamant naturel ou industriel, grenat, carbure de silicium, oxyde de chrome et/ou nitrure de bore cubique.

4. Procédé selon l'une des revendications précédentes,
**caractérisé en ce que**
la fusion ou le frittage du matériau de frittage (30) se fait en utilisant au moins un faisceau laser (L) ou au moins un faisceau de plasma.

5. Corps fritté (10) notamment brosse abrasive ou pierre abrasive ayant un corps fritté (50) réalisé selon le procédé de l'une quelconque des revendications précédentes,
- le corps fritté (50) ayant un segment de support (52) et un ou plusieurs segments abrasifs (54) de même construction par fusion ou frittage répétée par couches du matériau de frittage (30),
* le corps fritté (50) comportant le segment de support (52) et le ou plusieurs segments abrasifs (54) de même construction par la fusion ou le frittage répétés par couches d'un matériau de frittage (30),
corps abrasif **caractérisé en ce que**
les segments abrasifs (54) ont une structure en nids d'abeille, parallèle au segment de support (52), et une déformabilité élastique et/ou plastique qui permet de régler la dureté du corps abrasif (10) perpendiculairement au plan du segment de support (52) ou des segments abrasifs (54) qui ont une forme de non-tissé ou une forme d'éponge.

6. Corps abrasif (10) selon la revendication 5,
**caractérisé en ce que**
le segment de support (52) a une hauteur (H_{B}) comprise entre 1 mm et 5 mm et notamment entre 2 mm et 4 mm.

7. Corps abrasif (10) selon la revendication 6,
**caractérisé en ce que**
les segments abrasifs (54) sont fermés.

8. Corps abrasif (10) selon l'une des revendications 6 ou 7,
**caractérisé en ce que**
les segments abrasifs (54) ont une section de forme circulaire, elliptique ou polygonale.
